# EUROPEAN PATENT SPECIFICATION

(11) **EP 1 141 978 B1**
(45) Date of publication and mention of the grant of the patent: **01.08.2012**
(21) Application number: 99961721.0
(22) Date of filing: 19.11.1999
(51) Int. Cl.: C08L 23/08, H01B 7/28

(54) **A PROCESS FOR CONTROLLING WATER TREES**
VERFAHREN ZUR WASSERBÄUMCHEN-REGULIERUNG
PROCEDE DE CONTROLE D'HYDROARBORESCENCES

(30) Priority: 20.11.1998 US 197316
(43) Date of publication of application: 10.10.2001
(73) Proprietor: Union Carbide Chemicals & Plastics Technology LLC, Danbury, CT 06817-0001 (US)
(72) Inventor: JOW, Jinder, Somerville, NJ 08876 (US)
(74) Representative: Hayes, Adrian Chetwynd
(86) International application number: PCT/US1999/027478
(87) International publication number: WO 2000/031751

(56) References cited:
- EP-A- 0 341 621
- EP-A- 0 735 545
- WO-A-98/41995
- DATABASE WPI Section Ch, Week 200010 Derwent Publications Ltd., London, GB; Class A17, AN 2000-116767 XP002132172 & WO 99 65957 A (JAPAN POLYOLEFINS CO LTD) , 23 December 1999 (1999-12-23)
- DATABASE WPI Section Ch, Week 199707 Derwent Publications Ltd., London, GB; Class A14, AN 1997-073165 XP002132173 & JP 08 319381 A (MITSUBISHI CABLE IND LTD), 3 December 1996 (1996-12-03)

## Description

### Technical Field

This invention relates to a process for controlling water trees in a power cable.

### Background Information

A typical electric power cable generally comprises one or more conductors, which form a cable core that is surrounded by several layers of polymeric material including a first semiconducting shield layer, an insulating layer, a second semiconducting shield layer, a metallic tape or wire shield, and a jacket.

These insulated cables are known to suffer from shortened life when installed in an environment where the insulation is exposed to water, e.g., underground or locations of high humidity. The shortened life has been attributed to the formation of water trees, which occur when an organic polymeric material is subjected to an electrical field over a long period of time in the presence of water in liquid or vapor form. The net result is a reduction in the dielectric properties of the insulation.

Many solutions have been proposed for increasing the resistance of organic insulating materials used in cables to degradation by water treeing, i.e., controlling the length of water trees. One solution involves the addition of polyethylene glycol (PEG), as a water tree growth inhibitor, to a heterogeneous low density polyethylene such as described in United States Patents 4,305,849; 4,612,139; and 4,812, 505. The addition of PEG to polyethylene, however, presents certain problems, particularly in the area of long term heat stability and in compatibility with the host polymer. The latter is addressed by selecting a PEG of a particular molecular weight (weight average molecular weight); however, compounding conditions may still produce a low molecular weight fraction. The former requires the addition of a high level of certain heat stabilizers, which cause staining of the composition. The color (or stain) produced and the reduction in crosslinking, both due to the high level of heat stabilizer, lead to some commercial difficulties. The optimum would be a cable containing a polymer which exhibits commercially acceptable water tree retardance without the need for water tree retardant additives. Industry has not, however, found cables, which meet this criteria.

### Disclosure of the Invention

An object of this invention, therefore, is to provide a process for improving the water tree retardance of a polymer, which is used to insulate power cable, without the use of tree retardant additives. Other objects and advantages will become apparent hereinafter.

According to the invention, a process for controlling the length of water trees in a copolymer of ethylene and one or more alpha-olefins having 3 to 12 carbon atoms, which will be exposed to moisture, has been discovered which meets the above object. The process comprises selecting a copolymer with (1) a density in the range of 0.860 to 0.930 gram per cubic centimeter and (2) a melt flow ratio having at least about a value determined by the following formula: 2.7183 to the power of {[(6.184 times the density selected from the range set forth above) minus 5.21] divided by 0.08898}.

### Description of the Preferred Embodiment(s)

Polyethylene, as that term is used herein, is a copolymer of ethylene and a minor proportion of one or more alpha-olefins having 3 to 12 carbon atoms, and preferably 4 to 8 carbon atoms, and, optionally, a diene, or a mixture of such copolymers. The mixture can be a mechanical blend or an in situ blend. Examples of the alpha-olefins are propylene, 1-butene, 1-hexene, 4-methyl-1-pentene, and 1 octene.

The polyethylene can be homogenous or heterogeneous, and can have long chain branching. The homogeneous polyethylenes usually have a polydispersity (Mw/Mn) in the range of 1.5 to 3.5 and an essentially uniform comonomer distribution, and are characterized by single and relatively low DSC melting points. The heterogeneous polyethylenes, on the other hand, have a polydispersity (Mw/Mn) greater than 3.5 and do not have a uniform comonomer distribution. Mw is defined as weight average molecular weight.

The polyethylenes of interest here can have a density in the range of 0.860 to 0.930 gram per cubic centimetre, and preferably have density in the range of 0.880 to 0.920 gram per cubic centimetre. Once the density is selected the melt flow ratio is determined according to the formula set forth above, i.e. a melt flow ratio having at least about a value determined by the following formula: 2.7183 to the power of ([(6.184 times a density selected from the range set forth above) minus 5.21] divided by 0.08898). It will be understood that the desired melt flow ratio provides the improved water tree resistance. The melt index can be in the range of 0.1 to 30 grams per 10 minutes, and is preferably in the range of 0.5 to 10 grams per 10 minutes.

The polyethylenes can be produced by low pressure processes. They are preferably produced in the gas phase, but they can also be produced in the liquid phase in solutions or slurries by conventional techniques. Low pressure processes are typically run at pressures below 6.89MPa (1000 psi). Typical transition metal catalyst systems, which can be used to prepare these polyethylenes, are magnesium/titanium based catalyst systems, which can be exemplified by the catalyst system described in United States patent 4,302,565 (heterogeneous polyethylenes); vanadium based catalyst system such as those described in United States patents 4,508,842 (heterogeneous polyethylenes) and 5,332,793; 5,342,907; and 5,410,003 (homogeneous polyethylenes); a chromium based catalyst system such as that described in United States patent 4,101,445; a metallocene catalyst system such as that described in United States patents 4,937,299 and 5,317,036 (homogeneous polyethylenes); or other transition metal catalyst systems. Many of these catalyst systems are often referred to as Ziegler-Natta catalyst systems. Catalyst systems, which use chromium or molybdenum oxides on silica-alumina supports, are also useful. The preferred minimum melt flow ratio for metallocene catalyst systems is at least 10 percent higher than for other transition metal catalyst systems such as Ziegler-Natta catalyst systems.

Typical processes for preparing the polyethylenes are also described in the aforementioned patents. The various polyethylenes can include linear low density polyethylenes, very low density polyethylenes, and medium density polyethylenes. Thus, the copolymer having the desired density and melt flow ratio is prepared by conventional processes or selected from commercial polyethylenes, both in accordance with the formula set forth above.

Density is measured by producing a plaque in accordance with ASTM D-1928, procedure C, and then testing "as is" via ASTM D-1505. The density is reported in gram per cubic centimetre. Melt Index (g/10 min) is determined under ASTM D-1238, Condition E, It is measured at 190 degrees C and reported as grams per 10 minutes. Flow index is determined under ASTM D-1238, Condition F. It is measured at 190 degrees C at 10 times the weight used in the melt index test above. Melt flow ratio is the ratio of flow index to melt index.

Conventional additives, which can be introduced into the polyethylene composition, are exemplified by antioxidants, coupling agents, ultraviolet absorbers or stabilizers, antistatic agents. pigments, dyes, nucleating agents, reinforcing fillers or polymer additives, slip agents, plasticizers, processing aids, lubricants, viscosity control agents, tackifiers, anti-blocking agents, surfactants, extender oils, metal deactivators, voltage stabilizers, flame retardant fillers and additives, crosslinking agents, boosters, and catalysts, and smoke suppressants. Fillers and additives can be added in amounts ranging from less than 0.1 to more than 200 parts by weight for each 100 parts by weight of the base resin, in this case, polyethylene.

The use of carbon black in semiconductive layers is mentioned in United States Patent 4,857,232.

Examples of antioxidants are: hindered phenols such as tetrakis[methylene(3,5-di-tert- butyl-4-hydroxyhydrocinnamate)]-methane, bis[(beta-(3,5-ditert-butyl-4-hydroxybenzyl)-methylcarboxyethyl)]sulphide, 4,4-thiobis(2-methyl-6-tertbutylphenol), 4,4-thiobis(2-tert-butyl-5-methylphenol), 2,2-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; and various amines such as polymerized 2,2,4-trimethyl-1,2-dihydroquinoline. Antioxidants can be used in amounts of 0.1 to 5 parts by weight per 100 parts by weight of polyethylene.

The resins in the composition can be crosslinked by adding a crosslinking agent to the composition or by making the resin hydrolyzable, which is accomplished by adding hydrolyzable groups such as -Si(OR)₃ wherein R is a hydrocarbyl radical to the resin structure through copolymerization or grafting. They can also be crosslinked by irradiation.

Suitable crosslinking agents are organic peroxides such as dicumyl peroxide; 2,5-dimethyl- 2,5-di(t-butylperoxy)hexane; t-butyl cumyl peroxide; and 2,5-dimethyl-2,5-di(t-butylperoxy)hexane-3. Dicumyl peroxide is preferred.

Hydrolyzable groups can be added, for example, by copolymerizing ethylene and comonomer(s) with an ethylenically unsaturated compound having one or more -Si(OR)₃ groups such as vinyltrimethoxysilane, vinyltriethoxysilane, and gamma-methacryloxypropyltrimethoxysilane or grafting these silane compounds to the either resin in the presence of the aforementioned organic peroxides. The hydrolyzable resins are then crosslinked by moisture in the presence of a silanol condensation catalyst such as dibutyltin dilaurate, dioctyltin maleate, dibutyltin diacetate, stannous acetate, lead naphthenate, and zinc caprylate. Dibutyltin dilaurate is preferred.

Examples of hydrolyzable copolymers and hydrolyzable grafted copolymers are ethylene/comonomer/ vinyltrimethoxy silane copolymer, ethylene/comonomer/gamma- methacryloxypropyltrimethoxy silane copolymer, vinyltrimethoxy silane grafted ethylene/comonomer copolymer, vinyltrimethoxy silane grafted linear low density ethylene/1-butene copolymer, and vinyltrimethoxy silane grafted low density polyethylene.

Cables using the copolymer provided by this invention can be prepared in various types of extruders, e.g., single or twin screw types. Compounding can be effected in the extruder or prior to extrusion in a conventional mixer such as a Brabender™ mixer ; a Banbury™ mixer; or the twin screw extruder. A description of a conventional extruder can be found in United States patent 4,857,600. A typical extruder has a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of about 15:1 to about 30:1. In wire coating, where the material is crosslinked after extrusion, the die of the crosshead feeds directly into a heating zone, and this zone can be maintained at a temperature in the range of about 100 degrees C to about 260 degrees C, and preferably in the range of about 120 degrees C to about 220 degrees C.

The advantages of the process of the invention lies in the much improved water tree growth rate of the insulating or semiconducting layer in which the copolymer is used, i.e., matching water tree growth rates of tree retardant additive containing compositions, and the freedom from tree retardant additives. The composition, which includes the copolymer, is useful in low, medium, and high voltage applications.

The term "surrounded" as it applies to a substrate being surrounded by an insulating composition, jacketing material, or other cable layer is considered to include extruding around the substrate; coating the substrate; or wrapping around the substrate as is well known by those skilled in the art. The substrate can include, for example, a core including a conductor or a bundle of conductors, or various underlying cable layers as noted above.

All molecular weights mentioned in this specification are weight average molecular weights unless otherwise designated.

The invention is illustrated by the following examples.

### Examples 1 to 8

The resins of examples 1, 3, 5, 6, and 7 are made with a spray dried magnesium/titanium based catalyst as described in United States patent 5,290,745. The resin of example 2 is a compounded mixture of the resins made by a conventional Ziegler-Natta catalyst and a resin made by a metallocene catalyst. The resin of example 5 is made with a chromium based catalyst as described in United States patent application serial number 928,734 filed on September 12, 1997. A density is selected and the minimum melt flow ratio are determined in accordance with the formulas set forth above. Polymerization conditions are set to obtain the density and minimum melt flow ratio. The resin of example 8 is a crosslinked low density polyethylene made by a high pressure process. It is combined with a water tree retardant additive and an antioxidant to provide a high pressure low density polyethylene (HP-LDPE) composition.

The 8 resins are tested for water tree retardance under ASTM D-6097-97 at 5 kiloVolts and 1 kiloHerz for 30 days under 0.01 Normal salt (sodium chloride) water. The water tree retardance is assessed by determining the average water tree length in millimeters; the shorter tree length indicates the better tree retardance. The standard deviation of tree measurement is about 0.05 millimeter. Density is measured by a density column in accordance with ASTM D-792. The standard deviation of density measurement is 0.003 gram per cubic centimeter. Melt index and melt flow ratio are defined above. The standard deviations of melt index and melt flow ratio are 10 percent and 20 percent, respectively. Variables and result are reported in Table I:

**Table I**

| Example | 1 | 2 | 3 | 4 | 5 | 6 | 7 | 8 |
|---|---|---|---|---|---|---|---|---|
| comonomer | butene | butene and octene | butene | butene | butene | butene and hexene | butene | none |
| density (g/cc) | 0.886 | 0.887 | 0.918 | 0.900 | 0.917 | 0.921 | 0.924 | 0.923 |
| MI (g/10 min) | 0.7 | 6.7 | 0.9 | 5.0 | 0.7 | 0.6 | 19.5 | 2.1 |
| MFR | 36.1 | 34.9 | 27.6 | 26.9 | 72.3 | 136 | 24.7 | 55.6 |
| water tree length (mm) | 0.18 | 0.20 | 0.38 | 0.29 | 0.56 | 0.28 | 0.43 | 0.23 |

| | | | | | | | | |
|---|---|---|---|---|---|---|---|---|
| **Notes to Table:** butene = 1-butene hexene =1-hexene Mixture of 1-butene and 1-octene in example 2 = 80 percent by weight ethylene/1- butene copolymer and 20 percent by weight ethylene/1-octene copolymer. Example 6 is an ethylene, 1-butene, and 1-hexene terpolymer with a mixture of 39 percent by weight 1- butene and 61 percent by weight 1-hexene. The molar ratio of the comonomers to ethylene is about 0.4. MI = melt index g/10 min = grams per 10 minutes MFR = melt flow ratio mm = millimeter | | | | | | | | |

It will be observed that examples 1 and 2 meet the MFR criteria at a given density. Thus, the water tree lengths are substantially lower than those of examples 3 to 7, and better than the crosslinked HP-LDPE composition of example 8, which contains a water tree retardant additive.

Table II provides a calculated minimum melt flow ratio for each density to achieve good tree retardancy

**Table II**

| density | minimum |
|---|---|
| (g/cc) | MFR |
| 0.860 | 3.6 |
| 0.865 | 5.0 |
| 0.870 | 7.1 |
| 0.875 | 10.1 |
| 0.880 | 14.3 |
| 0.885 | 20.2 |
| 0.890 | 28.7 |
| 0.895 | 40.6 |
| 0.900 | 57.5 |
| 0.905 | 81.4 |
| 0.910 | 115.2 |
| 0.915 | 163.1 |
| 0.920 | 231.0 |
| 0.925 | 327.0 |
| 0.930 | 463.0 |

## Claims

1. A process for controlling the length of water trees to less than 0.23 mm as measured under ASTM D-6097 at 5 kiloVolts and 1 kiloHertz for 30 days under 0.01 Normal salt water in a copolymer of ethylene and one or more alpha-olefins having 3 to 12 carbon atoms, which will be exposed to moisture, comprising selecting a copolymer with (1) a density in the range of 0.860 to 0.930 gram per cubic centimetre and (2) a melt flow ratio having at least about a value determined by the following formula: 2.7183 to the power of ([(6.1894 times the density selected from the range set forth above) minus 5.21] divided by 0.08898).

2. The process defined in claim 1 wherein the density is selected from the range of 0.880 to 0.920 gram per cubic centimeter.

3. The process defined in claim 1 wherein the alphaolefin has 4 to 8 carbon atoms.

4. The process defined in claim 1 wherein the alphaolefin is 1-butene, 1-hexene, or 1-octene.

5. The process defined in claim 1 wherein the alphaolefin is a mixture of 1-butene and 1-hexene or 1-butene and 1-octene.

6. The process defined in claim 1 wherein the selected copolymer is extruded around an electrical conductor or a core of electrical conductors to form a cable.

7. A process for controlling the length of water trees to less than 0.23 mm as measured under ASTM D-6097 at 5 kiloVolts and 1 kiloHertz for 30 days under 0.01 Normal salt water in a cable, which will be exposed to moisture comprising selecting a copolymer of ethylene and one or more alpha-olefins having 4 to 8 carbon atoms with (1) a density in the range of 0.880 to 0.920 grams per cubic centimetre and (2) a melt flow ratio having at least about a value determined by the following formula: 2.7183 to the power of {[(66.1894 times the density selected from the range set forth above) minus 5.21], divided by 0.08898}, preparing a polyethylene composition with the selected copolymer providing that the polyethylene composition is free of other ethylene polymers, and extruding the polyethylene composition around an electrical conductor or a core of electrical conductors to form a cable.

8. The process defined in claim 7 wherein the alphaolefin is 1-butene, 1-hexene, or 1-octene.

9. The process defined in claim 7 wherein the alphaolefin is a mixture of 1-butene and 1-hexene or 1-butene and 1-octene.

10. A method of selecting a copolymer of ethylene and one or more alpha-olefins having 3 to 12 carbon atoms having an improved water tree retardance when exposed to moisture, as determined by controlling the length of water trees to less than 0.23 mm as measured under ASTM D-6097 at 5 kiloVolts and 1 kiloHertz for 30 days under 0.01 Normal salt water, which comprises:
(1) selecting a desired density for the copolymer from the range of 0.860 to 0.930 gram per cubic centimetre; and
(2) once the density has been selected, selecting a copolymer having a melt flow ratio of at least about a value determined by the following formula: 2.7183 to the power of ([6.1894 times the density selected from the range set forth above) minus 5.21] divided by 0.08898).

## Patentansprüche

1. Verfahren zum Regulieren der Länge von Wasserbäumchen auf weniger als 0,23 mm, gemessen nach ASTM D-6097 bei 5 kV und 1 kHz für 30 Tage unter 0,01 L normalem Salzwasser in einem Copolymer von Ethylen und einem oder mehreren α-Olefinen mit 3 bis 12 Kohlenstoffatomen, das Feuchtigkeit ausgesetzt wird, umfassend den Schritt des Auswählens eines Copolymers mit (1) einer Dichte im Bereich von 0,860 bis 0,930 g/cm³ und (2) einem Schmelzflussverhältnis mit mindestens etwa einem nach der folgenden Formel ermittelten Wert: 2,7183 hoch ([(6,1894 mal der aus dem oben aufgeführten Bereich ausgewählten Dichte) minus 5,21] dividiert durch 0,08898).

2. Verfahren nach Anspruch 1, wobei die Dichte aus dem Bereich von 0,880 bis 0,920 g/cm³ ausgewählt ist.

3. Verfahren nach Anspruch 1, wobei das α-Olefin 4 bis 8 Kohlenstoffatome hat.

4. Verfahren nach Anspruch 1, wobei das α-Olefin 1-Buten, 1-Hexen oder 1-Octen ist.

5. Verfahren nach Anspruch 1, wobei das α-Olefin eine Mischung von 1-Buten und 1-Hexen oder 1-Buten und 1-Octen ist.

6. Verfahren nach Anspruch 1, wobei das ausgewählte Polymer um einen elektrischen Leiter oder einen Kern aus elektrischen Leitern extrudiert wird, um ein Kabel zu bilden.

7. Verfahren zum Regulieren der Länge von Wasserbäumchen auf weniger als 0,23 mm, gemessen nach ASTM D-6097 bei 5 kV und 1 kHz für 30 Tage unter 0,01 L normalem Salzwasser in einem Kabel, das Feuchtigkeit ausgesetzt wird, umfassend die folgenden Schritte: Auswählen eines Copolymers von Ethylen und einem oder mehreren α-Olefinen mit 4 bis 8 Kohlenstoffatomen mit (1) einer Dichte im Bereich von 0,880 bis 0,920 g/cm³ und (2) einem Schmelzflussverhältnis mit mindestens etwa einem nach der folgenden Formel ermittelten Wert: 2,7183 hoch ([(6,1894 mal der aus dem oben aufgeführten Bereich ausgewählten Dichte) minus 5,21] dividiert durch 0,08898), Herstellen einer Polyethylenzusammensetzung mit dem ausgewählten Copolymer mit der Maßgabe, dass die Polyethylenzusammensetzung frei ist von anderen Ethylenpolymeren, und Extrudieren der Polyethylenzusammensetzung um einen elektrischen Leiter oder einen Kern aus elektrischen Leitern, um ein Kabel zu bilden.

8. Verfahren nach Anspruch 7, wobei das α-Olefin 1-Buten, 1-Hexen oder 1-Octen ist.

9. Verfahren nach Anspruch 7, wobei das α-Olefin eine Mischung von 1-Buten und 1-Hexen oder 1-Buten und 1-Octen ist.

10. Verfahren zur Auswahl eines Copolymers von Ethylen und einem oder mehreren α-Olefinen mit 3 bis 12 Kohlenstoffatomen, das unter dem Einfluss von Feuchtigkeit eine bessere Hemmung von Wasserbäumchen zeigt, ermittelt durch Regulierung der Länge von Wasserbäumchen auf weniger als 0,23 mm, gemessen nach ASTM D-6097 bei 5 kV und 1 kHz für 30 Tage unter 0,01 L normalem Salzwasser, mit den folgenden Schritten:
(1) Auswählen einer gewünschten Dichte für das Copolymer aus dem Bereich von 0,860 bis 0,930 g/cm³; und
(2) sobald die Dichte ausgewählt wurde, Auswählen eines Copolymers mit einem Schmelzflussverhältnis von mindestens etwa einem nach der folgenden Formel ermittelten Wert: 2,7183 hoch ([(6,1894 mal der aus dem oben aufgeführten Bereich ausgewählten Dichte) minus 5,21] dividiert durch 0,08898).

## Revendications

1. Procédé permettant de maîtriser, dans un copolymère d'éthylène et d'une ou plusieurs alpha-oléfine(s) comportant de 3 à 12 atomes de carbone qui sera exposé à l'humidité, la longueur des arborescences d'eau de telle sorte que, mesurée selon la norme ASTM D-6097 à 5 kilovolts et 1 kilohertz et en présence d'eau salée à 0,01 N, elle vaudra moins de 0,23 mm pendant 30 jours, lequel procédé comprend le fait de sélectionner un copolymère qui présente
1) une masse volumique valant de 0,860 à 0,930 g/cm³,
2) et un rapport d'indices d'écoulement à l'état fondu qui vaut au moins à peu près ce que donne l'expression suivante : 2,7183 à la puissance {[(6,1894 fois la valeur de la masse volumique, prise dans l'intervalle indiqué ci-dessus) moins 5,21] divisé par 0,08898}.

2. Procédé conforme à la revendication 1, dans lequel la masse volumique est choisie dans l'intervalle allant de 0,880 à 0,920 g/cm³.

3. Procédé conforme à la revendication 1, dans lequel l'alpha-oléfine comporte de 4 à 8 atomes de carbone.

4. Procédé conforme à la revendication 1, dans lequel l'alpha-oléfine est du but-1-ène, de l'hex-1-ène ou de l'oct-1-ène.

5. Procédé conforme à la revendication 1, dans lequel l'alpha-oléfine est un mélange de but-1-ène et d'hex-1-ène ou un mélange de but-1-ène et d'oct-1-ène.

6. Procédé conforme à la revendication 1, dans lequel on extrude le copolymère sélectionné autour d'un conducteur électrique ou d'une âme de conducteurs électriques, de manière à former un câble.

7. Procédé permettant de maîtriser, dans un câble qui sera exposé à l'humidité, la longueur des arborescences d'eau de telle sorte que, mesurée selon la norme ASTM D-6097 à 5 kilovolts et 1 kilohertz et en présence d'eau salée à 0,01 N, elle vaudra moins de 0,23 mm pendant 30 jours, lequel procédé comprend :
le fait de sélectionner un copolymère d'éthylène et d'une ou plusieurs alpha-oléfine(s) comportant de 4 à 8 atomes de carbone, qui présente
1) une masse volumique valant de 0,880 à 0,920 g/cm³,
2) et un rapport d'indices d'écoulement à l'état fondu qui vaut au moins à peu près ce que donne l'expression suivante : 2,7183 à la puissance {[(6,1894 fois la valeur de la masse volumique, prise dans l'intervalle indiqué ci-dessus) moins 5,21] divisé par 0,08898} ;
le fait de préparer une composition de polyéthylène avec le copolymère sélectionné, étant entendu que la composition de polyéthylène ne contient pas d'autres polymères d'éthylène ;
et le fait d'extruder cette composition de polyéthylène autour d'un conducteur électrique ou d'une âme de conducteurs électriques, de manière à former un câble.

8. Procédé conforme à la revendication 7, dans lequel l'alpha-oléfine est du but-1-ène, de l'hex-1-ène ou de l'oct-1-ène.

9. Procédé conforme à la revendication 7, dans lequel l'alpha-oléfine est un mélange de but-1-ène et d'hex-1-ène ou un mélange de but-1-ène et d'oct-1-ène.

10. Procédé de sélection d'un copolymère d'éthylène et d'une ou plusieurs alpha-oléfine(s) comportant de 3 à 12 atomes de carbone, présentant une capacité améliorée à retarder l'apparition d'arborescences d'eau lorsqu'il est exposé à l'humidité, capacité indiquée par le fait que la longueur des arborescences d'eau est maîtrisée de telle sorte que, mesurée selon la norme ASTM D-6097 à 5 kilovolts et 1 kilohertz et en présence d'eau salée à 0,01 N, elle vaudra moins de 0,23 mm pendant 30 jours, lequel procédé comprend :
1) le fait de choisir une valeur voulue de la masse volumique du copolymère, dans l'intervalle allant de 0,860 à 0,930 g/cm³,
2) et une fois choisie la valeur de sa masse volumique, le fait de sélectionner un copolymère qui présente un rapport d'indices d'écoulement à l'état fondu valant au moins à peu près ce que donne l'expression suivante : 2,7183 à la puissance {[(6,1894 fois la valeur de la masse volumique, choisie dans l'intervalle indiqué ci-dessus) moins 5,21] divisé par 0,08898}.
